# EUROPÄISCHE PATENTSCHRIFT

(11) **EP 3 207 973 B1**
(45) Veröffentlichungstag und Bekanntmachung des Hinweises auf die Patenterteilung: **12.09.2018**
(21) Anmeldenummer: 16174412.3
(22) Anmeldetag: 14.06.2016
(51) Int. Cl.: B01D 46/00

(54) **FILTERVORRICHTUNG FÜR GASE, INSBESONDERE FÜR MIT FARBNEBEL BELASTETE ABLUFT**
FILTER DEVICE FOR GASES, PARTICULARLY FOR WASTE GAS CHARGED WITH CLOUDS OF PAINT PARTICLES
DISPOSITIF DE FILTRE POUR GAZ, EN PARTICULIER POUR AIR EVACUE CHARGE DE BROUILLARD DE PEINTURE

(30) Priorität: 18.02.2016 DE 202016001034 U
(43) Veröffentlichungstag der Anmeldung: 23.08.2017
(73) Patentinhaber: Schindler, Sabine, 41372 Niederkrüchten (DE); Heckmann, Norbert, 41366 Schwalmtal (DE)
(72) Erfinder: Schindler, Sabine, 41372 Niederkrüchten (DE); Heckmann, Norbert, 41366 Schwalmtal (DE)
(74) Vertreter: Jabbusch, Matthias

(56) Entgegenhaltungen:
- DE-A1-102011 108 631

## Beschreibung

Die Erfindung betrifft eine Filtervorrichtung für Gase, insbesondere für mit Farbnebel belastete Abluft, umfassend eine in einem Führungsweg für das Gas angeordnete Aufnahmeeinrichtung für Filterkörper.

Filtervorrichtungen vorbezeichneter Gattung werden dazu eingesetzt, aus Gasen Fremdkörper, Schadstoffe und/oder Belastungen herauszufiltern. Eine Filtervorrichtung wird daher in einen Führungsweg für das Gas eingebracht, so dass das Gas durch die Filtervorrichtung hindurchströmen muss.

Bekannte Filtervorrichtungen weisen eine Aufnahmeeinrichtung für Filterkörper auf, beispielsweise ein Gehäuse oder eine Einstelleinrichtung für derartige Filterkörper. Diese Filterkörper sind z.B. baugleich, sie sind regelmäßig als Quader ausgebildet. Sie können aus Pappe, Papier, Webstoffen oder anderen Filterstoffen ausgebildet sein.

In bekannten Filtervorrichtungen werden mehrere Filterköper gestapelt, so dass sie eng aneinander bzw. aufeinander liegen. Das zu filternde Gas soll nicht zwischen den Filterkörpern ohne eine Filterung hindurchtreten, vielmehr soll es durch die Filterkörper hindurchströmen.

Die aus dem zu filternden Gas ausgeschiedenen Schadstoffe, Belastungen, Partikel verbleiben in den Filterkörpern. Daher setzt sich mit der Zeit ein derartiger Filterkörper zu und das Hindurchführen des Gases durch diesen Filterkörper ist erschwert.

Liegt ein Zusetzten der Filterkörper vor, ist im Stand der Technik eine Unterbrechung des Prozesses notwendig, so dass der Führungsweg für das Gas unterbrochen ist. Während dieser Unterbrechung können dann die zugesetzten Filterkörper aus der Aufnahmeeinrichtung herausgenommen werden, sie werden anschließend durch neue unverbrauchte Filterkörper ersetzt. Im Stand der Technik ist somit eine separate Umrüstphase notwendig, in der ein Prozess, bei dem die zu filternden Gase entstehen, unterbrochen werden muss. Soll ein Unterbrechen nicht stattfinden, sind zwei Vorrichtungen nach dem Stand der Technik vorzusehen, die dann wechselseitig mit dem zu filternden Gas beschickt werden. Hier ist nachteilig, dass ein entsprechender Vorrichtungsaufwand betrieben wird und auch ein entsprechender Raumbedarf besteht.

DE102011108631 beschreibt eine Filtervorrichtung mit austauschbaren Filtermodulen. Der Erfindung liegt die Aufgabe zugrunde, eine Filtervorrichtung der eingangs genannten Gattung aufzuzeigen, mit der ein Filtern der Gase ohne Unterbrechen eines die Gase bildenden Prozesses und ohne erhöhten Raumbedarf ermöglicht ist.

Diese Aufgabe ist durch eine Filtervorrichtung nach dem Anspruch 1 gelöst.

Bei der erfindungsgemäßen Vorrichtung sind zunächst die Filterkörper nicht alle in ein und derselben Aufnahmeeinrichtung angeordnet und somit sind nicht alle Filterkörper einander in einer Anordnung zugeordnet. Es sind vielmehr Teilaufnahmeeinrichtungen vorgesehen, wodurch auch Teilgruppen der Filterkörper ausgebildet werden. Diese Auftrennung der Aufnahmeeinrichtung ermöglicht eine Kontrolle der einzelnen Filterkörpergruppen unabhängig von anderen Filterkörpergruppen. Es kann festgestellt werden, ob zum Beispiel eine mit den zu filternden Gasen zuerst beaufschlagte Filtergruppe sich stärker zusetzt als eine andere Filtergruppe.

Die Erfindung sieht weiter vor, dass jede Teilaufnahmeeinrichtung eine Bewegungsaufnahme für die Filterkörper hat. Mit der Bewegungsaufnahme können die Filterkörper bewegt werden. Die Filterkörper sind also nicht ortsfest in der Aufnahmeeinrichtung angeordnet, sondern beweglich. Diese Beweglichkeit ermöglicht, zugesetzte Filterkörper aus der Teilaufnahmeeinrichtung zu entfernen und durch neue unverbrauchte Filterkörper zu ersetzten, ohne dass der Prozess dafür anzuhalten wäre.

Die Aufteilung der Aufnahmeeinrichtung in Teilaufnahmeeinrichtungen gewährleistet, dass bei einem Filterkörperteilaustausch in einer Teilaufnahmeeinrichtung durch die Bewegungsaufnahme kein filterkörperfreies Durchleiten des Gases auftritt. In anderen Teilaufnahmeeinrichtungen sind weitere Filterkörper enthalten, durch die das Gas hindurchtreten muss. Im Übrigen kann das Austauschen der Filterkörper durch die Bewegungsaufnahme nahtlos und fortlaufend erfolgen, ohne dass ein Filtern des Gases durch diese Teilaufnahmeeinrichtung beeinträchtigt ist.

Nach einer ersten Weiterbildung der Erfindung ist vorgesehen, dass jeder Teilaufnahmeeinrichtung für Filterkörper eine Zuführeinrichtung für unbenutzte Filterkörper und eine Wegführeinrichtung für verbrauchte Filterkörper zugeordnet ist. Mit den Zuführ- und Wegführeinrichtungen werden die Filterkörper an die Teilaufnahmeeinrichtung herangeführt und von dieser weggeführt. Dies erfolgt maschinell und kann durch den Einsatz entsprechender Sensoren und Messeinrichtungen auch automatisiert erfolgen. Die Zuführeinrichtung und die Wegführeinrichtung können Förderbänder umfassen, auf denen die Filterkörper aufstehen. Alternativ zu Förderbändern können auch Rollenstrecken eingesetzt werden.

Eine nächste Weiterbildung der Erfindung schlägt vor, dass jede Teilaufnahmeeinrichtung zumindest eine Schiebeführung für Filterkörper hat, in der die Filterkörper in einer Reihe aneinander liegend aufgenommen sind. Mit der Schiebeführung können die Filterkörper bewegt werden. Dabei stehen sie beispielsweise nebeneinander auf der Schiebeführung auf, sie liegen aneinander und bilden eine geschlossene Filterwand aus. Die Filterkörper werden in eine Richtung bewegt, am Ende dieser Bewegung können verbrauchte Filterkörper weggenommen werden und am Anfang der Bewegung unbenutzte Filterkörper hinzugefügt werden. Der Filterbetrieb läuft währenddessen fortlaufend ohne Unterbrechung. Auch für die Schiebeführung können Rollenstrecken verwendet werden.

Jeder Teilaufnahmeeinrichtung ist vorzugsweise eine Messeinrichtung für in der Teilaufnahmeeinrichtung aufgenommene Filterkörper und damit für die aus den Filterkörpern ausgebildeten Filterstufen zugeordnet. In den einzelnen Teilaufnahme-einrichtungen können somit die Filterstufen auch einzeln gemessen werden. Dadurch wird erkannt, ob in einer Teilaufnahmeeinrichtung die Filterkörper stärker verschmutzen, als in einer anderen Teilaufnahmeeinrichtung. Auf der Grundlage dieser Erkenntnis können dann nur dort wo eine stärkere Verschmutzung gemessen wird ein früherer Wechsel der Filterkörper vorgenommen werden. Noch nicht so stark verschmutzte Filterstufen können weiter benutzt werden, so dass es nicht notwendig ist, bei einer nachlassenden Filterleistung alle Filterkörper auszutauschen. Die Messeinrichtung ist eine an sich bekannte Differenzdruckmesseinrichtung. Mit dieser können die Differenzdrücke der Filterstufen einer Teilaufnahmeeinrichtung gemessen werden.

Weitere Ausbildungen betreffen die Ausgestaltung der beiden Teilaufnahmeeinrichtungen. So kann vorgesehen sein, dass die zuerst vom Gas beaufschlagte Teilaufnahmeeinrichtung Lamellen als Filterkörper umfasst. Diese Lamellen werden von dem Gas umströmt, dabei wird das Gas abgelenkt. Aufgrund der Ablenkung treten Fliehkräfte auf, die bewirken, dass Farbpartikel in dem Gas beschleunigt werden und sich auf den Oberflächen der Lamellen absetzen können. Die Lamellen können dabei fortlaufend bewegt werden, so dass mit Farbpartikel belegte Lamellen aus der Teilaufnahmeeinrichtung entfernt werden und durch neue und noch nicht mit Farbe belegte Lamellen ersetzt werden. Dabei kann ein Kreislaufsystem vorgesehen sein, indem mit Farbe belegte Lamellen gereinigt werden und wiederverwendet werden.

Hinsichtlich der Lamellen sieht eine Weiterbildung der Erfindung vor, dass die Lamellen jeweils als U-Profile ausgebildet sind, wobei die Lamellen in zumindest zwei parallel zueinander ausgerichteten Ebenen angeordnet sind. Als U-Profile ausgebildete Lamellen haben eine große Oberfläche, an der sich Farbpartikel absetzen können. Die Abluft wird um die U-Schenkel herumgelenkt, so dass die Fliehkrafteffekte auftreten. Vorzugsweise sind die Lamellen in einander benachbarten Ebenen zueinander versetzt und miteinander zugekehrten U-Schenkeln angeordnet, so dass sich für die Abluft ein regelrechter labyrinthartiger Weg ergibt. Mehrfaches Ablenken der Abluft ist die Folge, wodurch ein Herauslösen großer Mengen der Farbbelastung aus der Luft bereits in der ersten Teilaufnahmeeinrichtung gelingt.

Für eine nachfolgend vom Gas beaufschlagte Teilaufnahmeeinrichtung sieht eine Weiterbildung der Erfindung Filterkassetten zur Aufnahme von Filtermaterialien als Filterkörper vor. Filterkassetten sind standardisierte Kaufteile, die auch für die erfindungsgemäße Filtervorrichtung verwendet werden können. Die Filterkassetten sind mit verschiedenen Arten von Filtermaterialien zu füllen, auf diese Weise werden preiswerte Filterkörper ausgebildet.

Die erfindungsgemäße Vorrichtung hat somit vorzugsweise in der ersten Filterstufe einen Lamellenvorhang und in der zweiten Filterstufe mit Filtermaterialien gefüllte Filterkassetten.

Ausführungsbeispiele, aus denen sich weitere erfinderische Merkmale ergeben, sind in der Zeichnung dargestellt. Es zeigen:
- Figur 1:: eine schematische Draufsicht eines ersten Ausführungsbeispiels;
- Figur 1a:: eine schematische Seitenansicht des Ausführungsbeispiels nach Figur 1;
- Figur 2:: eine Seitenansicht einer Filtervorrichtung nach einem zweiten Ausführungsbeispiel;
- Figur 3:: eine weitere Seitenansicht der Filtervorrichtung nach Figur 2; und
- Figur 4:: eine Draufsicht der Filtervorrichtung gemäß Figuren 2 und 3.
- Figur 5:: eine perspektivische Ansicht einer Filtervorrichtung nach einem dritten Ausführungsbeispiel,
- Figur 6:: eine Draufsicht auf ein Detail der Filtervorrichtung nach Figur 5 und
- Figur 7:: eine Seitenansicht von Komponenten der Filtervorrichtung gemäß Figur 5.

Bei dem ersten Ausführungsbeispiel der erfindungsgemäßen Filtervorrichtung ist für die Filtervorrichtung ein Gehäuse 1 vorgesehen. In diesem Gehäuse 1 sind Filterkörper 2, 3, 4 angeordnet, wobei die Filterkörper 4 ein größeres Volumen als die Filterkörper 2, 3 haben. Die Filterkörper 4 sind in einer Teilaufnahmeeinrichtung 5 angeordnet. Auch für die kleineren Filterkörper 2, 3 gibt es Teilaufnahmeeinrichtungen 6, 7. In diesen Teilaufnahmeeinrichtungen 5, 6, 7 sind die einander baugleichen Filterkörper 2, 3, 4 eng aneinander gelegt, zwischen den Teilaufnahmeeinrichtungen 5, 6, 7 besteht aber jeweils ein Abstand.

Der in die Filterkörper 2, 3, 4 eintretende Abgasstrom ist durch Pfeile 8 gekennzeichnet. Neben den im Gehäuse 1 vorhanden Filterkörpern 2, 3, 4 sind in einem Bereich außerhalb des Gehäuses 1 weitere Filterkörper 2, 3 vorgesehen. Diese Filterkörper 2, 3, 4 sind unverbraucht. Sie können in das Gehäuse 1 geschoben werden, wobei sie je nach eingeschobener Menge entsprechende bisher im Gehäuse 1 vorhandene Filterkörper 2, 3, 4 aus diesem herausdrängen. Auf diese Weise erfolgt ein Ersatz verbrauchter Filterkörper 2, 3, 4 durch nichtverbrauchte Filterkörper 2, 3, 4.

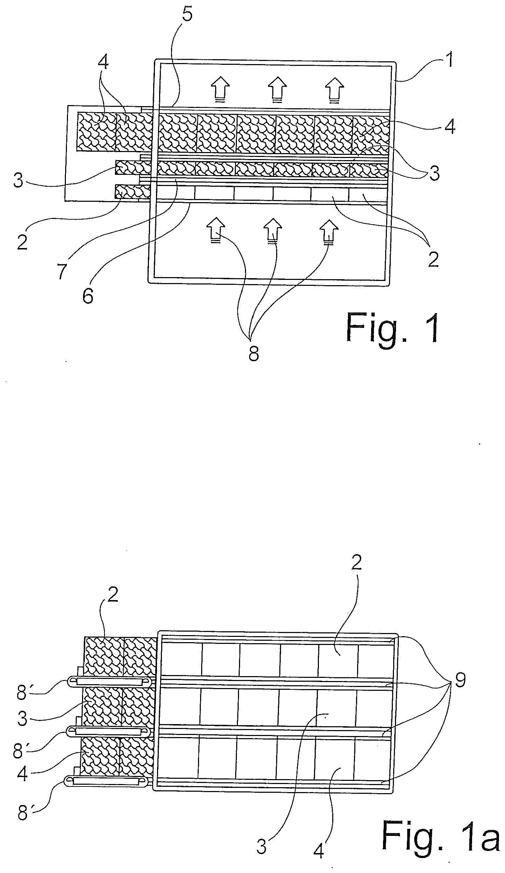

Figur 1a zeigt eine Seitenansicht von Figur 1, bei dem das zu reinigende Gas frontseitig eintritt. In den einzelnen Teilaufnahmeeinrichtungen sind baugleiche Filterkörper 2, 3, 4 angeordnet.

Für nachzuführende unverbrauchte Filterkörper 2, 3, 4 sind Förderbänder 8' vorgesehen, mit diesen kann ein unverbrauchter Filterkörper 2, 3, 4 in die Teilaufnahmeeinrichtung 9 eingeführt werden, am gegenüberliegenden Ende der Teilaufnahmeeinrichtung 9 wird dafür ein verbrauchter Filterkörper 2, 3, 4 aus der Teilaufnahmeeinrichtung 9 herausgeführt.

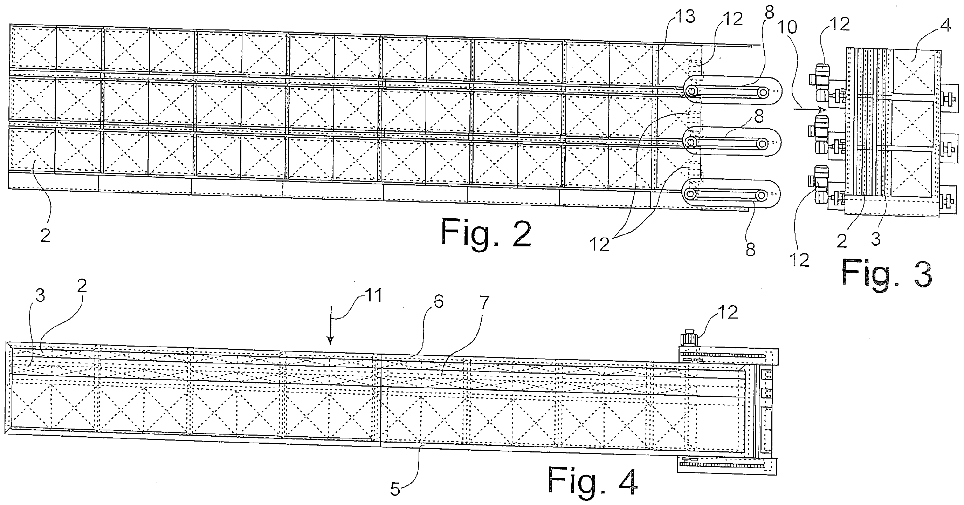

Figuren 2 und 3 zeigen ein Ausführungsbeispiel einer Filtervorrichtung, bei der Filterkörper 2, 3,4 in zwei verschiedenen Größen verwendet werden. Der Eintritt der Abluft erfolgt nach Pfeil 10 in Figur 3 bzw. Pfeil 11 in Figur 4 zunächst zu den kleineren Filterkörpern 2,3, bevor das Gas, beispielsweise farbnebelhaltige Abluft, in die größeren Filterkörper 4 eintritt. In den Teilaufnahmeeinrichtungen sind jeweils drei Filterkörper übereinander aufgenommen, Filterkörper 2, 3, 4 sind jeweils in einer Filterstufe in der Teilaufnahmeeinrichtung angeordnet.

Den einzelnen Etagen sind Elektromotoren 12 zugeordnet, die Förderbänder 8 antreiben. Auch hier können mit Hilfe der Elektromotoren 12 und Förderbänder 8 neue Filterkörper 2, 3, 4 über eine lufttechnische Trennung 13 hinweg in die Teilaufnahmeeinrichtungen 5, 6, 7 eingebracht werden.

Die verschiedenen Ausführungsbeispiele zeigen, dass voneinander verschiedene Filterkörper 2, 3, 4 verwendet werden können. Die Filterkörper 2, 3, 4 können voneinander verschiedene Abmessungen haben, es können entsprechende Filterkörpergruppen gebildet werden und in Teilaufnahmeeinrichtungen aufgenommen werden.

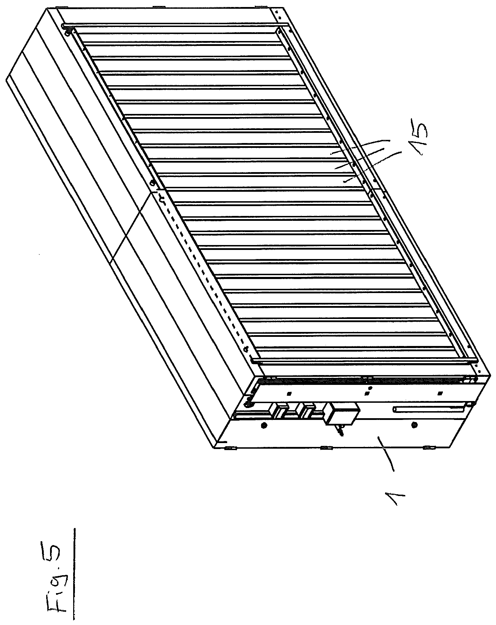

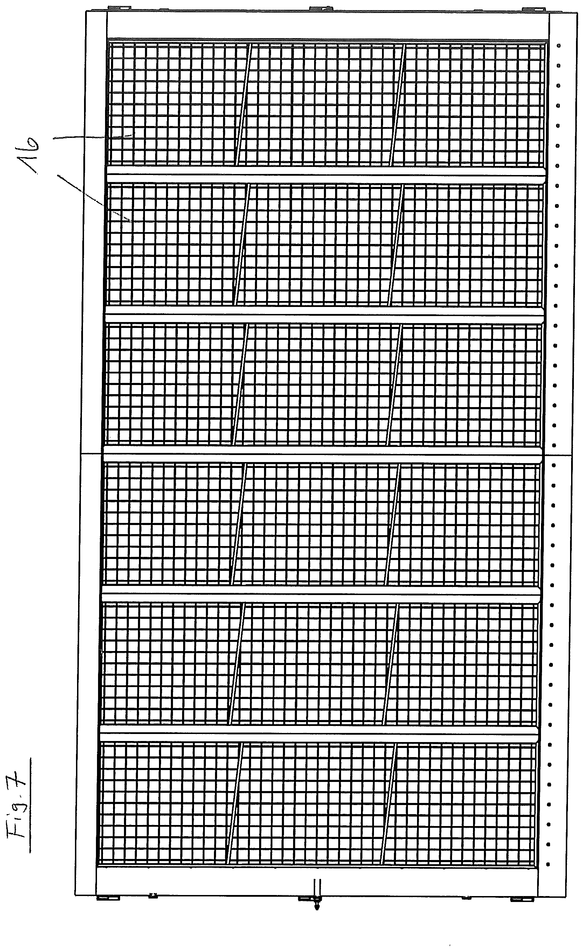

Auch bei dem Ausführungsbeispiel nach Figur 5 sind in ein Gehäuse 1 zwei Filterstufen eingesetzt. Die Filterkörper der ersten Filterstufe sind durch Lamellen 15 ausgebildet. Die zweite Filterstufe bilden Filterkassetten 16 aus, die in Figur 7 dargestellt sind. Das dritte Ausführungsbeispiel stellt insgesamt eine kompakte Filtervorrichtung dar. Wie bei den anderen Ausführungsbeispielen sind die Lamellen 15 in Bewegungsführungen aufgenommen. Diese können durch Rollenstrecken ausgebildet sein.

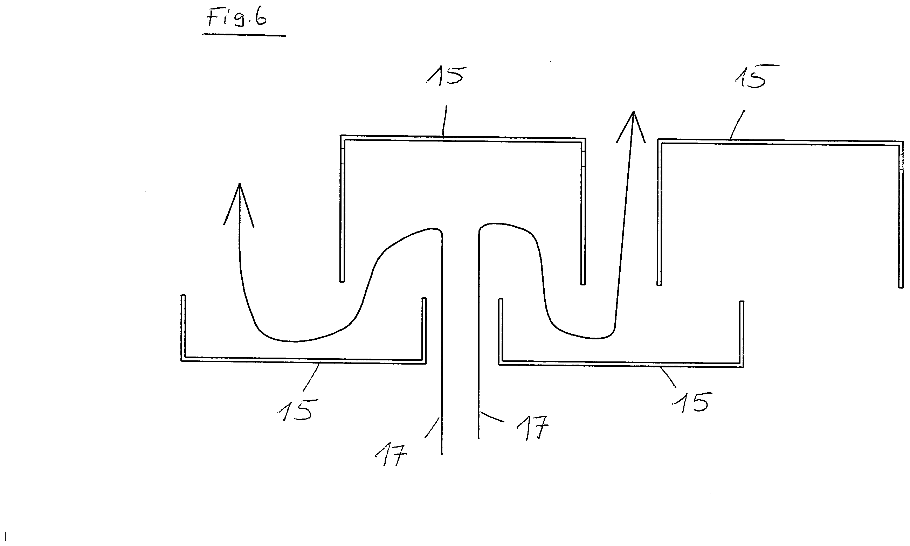

Figur 6 zeigt, dass die Lamellen 15 jeweils als U-Profile ausgebildet sind. In zwei parallel zueinander ausgerichteten Ebenen sind die Lamellen 15 angeordnet, dabei sind die U-Schenkel der Lamellen 15 jeder Ebene den U-Schenkeln der Lamellen 15 zugekehrt. Zwischen den Lamellenebenen gibt es einen Versatz, so dass die U-Schenkel der Lamellen 15 einer Ebene in die U-Basis einer Lamelle 15 der anderen Ebene weisen.

Der Weg für die Abluft durch diese Lamellen 15 ist durch Pfeil 17 kenntlich gemacht. Aufgrund der Ausbildung der Lamellen 15 wird die Abluft mäanderartig und mit mehreren Ablenkungen durch die erste Filterstufe geführt.

Figur 7 zeigt noch, dass die Filterkassetten 16 der zweiten Filterstufe mit verschiedenen Filtermaterialien gefüllt werden können. Die Filterkassetten 16 können beispielsweise Netzkörper sein, deren Innenraum mit Filtermaterialien auffüllbar ist.

## Patentansprüche

1. Filtervorrichtung für Gase, insbesondere für mit Farbnebel belastete Abluft, umfassend eine in einem Führungsweg für das Gas angeordnete Aufnahmeeinrichtung für Filterkörper,
**dadurch gekennzeichnet,**
**dass** die Aufnahmevorrichtung in zumindest zwei im Führungsweg des Gases nacheinander angeordnete und einen Abstand zueinander aufweisende Teilaufnahmeeinrichtungen (5, 6, 7) unterteilt ist und dass jede Teilaufnahmeeinrichtung (5, 6, 7) eine Bewegungsaufnahme für die Filterkörper (2, 3, 4) hat.

2. Filtervorrichtung nach Anspruch 1, **dadurch gekennzeichnet, dass** jeder Teilaufnahmeeinrichtung (5, 6, 7) für die Filterkörper (2, 3, 4) eine Zuführeinrichtung für unbenutzte Filterkörper (2, 3, 4) und eine Wegführeinrichtung für verbrauchte Filterkörper (2, 3, 4) zugeordnet ist.

3. Filtervorrichtung nach Anspruch 2, **dadurch gekennzeichnet, dass** die Zuführeinrichtung und die Wegführeinrichtung Förderbänder (8') umfassen.

4. Filtervorrichtung nach Anspruch 2, **dadurch gekennzeichnet, dass** die Zuführeinrichtung und die Wegführeinrichtung Rollenstrecken umfassen.

5. Filtervorrichtung nach einem der vorhergehenden Ansprüche, **dadurch gekennzeichnet, dass** jede Teilaufnahmeeinrichtung (5, 6, 7) zumindest eine Schiebeführung für Filterkörper (2, 3, 4) hat, in der die Filterkörper (2, 3, 4) in einer Reihe aneinander liegend aufgenommen sind.

6. Filtervorrichtung nach einem der vorhergehenden Ansprüche, **dadurch gekennzeichnet, dass** jeder Teilaufnahmeeinrichtung (5, 6, 7) eine Messeinrichtung für in der Teilaufnahmeeinrichtung (5, 6, 7) aufgenommene Filterkörper (2, 3, 4) zugeordnet ist.

7. Filtervorrichtung nach Anspruch 6, **dadurch gekennzeichnet, dass** die Messeinrichtung eine Differenzdruckmesseinrichtung ist.

8. Filtervorrichtung nach einem der vorhergehenden Ansprüche, **dadurch gekennzeichnet, dass** die zuerst vom Gas beaufschlagte Teilaufnahmeeinrichtung Lamellen (15) als Filterkörper umfasst.

9. Filtervorrichtung nach Anspruch 8, **dadurch gekennzeichnet, dass** die Lamellen (15) jeweils als U-Profile ausgebildet sind, wobei die Lamellen (15) in zumindest zwei parallel zueinander ausgerichteten Ebenen angeordnet sind.

10. Filtervorrichtung nach Anspruch 9, **dadurch gekennzeichnet, dass** die Lamellen (15) in einander benachbarten Ebenen zueinander versetzt und mit einander zugekehrten U-Schenkel angeordnet sind.

11. Filtervorrichtung nach einem der vorhergehenden Ansprüche, **dadurch gekennzeichnet, dass** eine nachfolgend vom Gas beaufschlagte Teilaufnahmeeinrichtung Filterkassetten (16) zur Aufnahme von Filtermaterialien als Filterkörper umfasst.

## Claims

1. A filter apparatus for gases, in particular, for exhaust air contaminated with paint mist, comprising a holding device arranged in a guide path for the gas for filter bodies,
**characterized in**
**that** the holding device is divided into at least two sub-holding devices (5, 6, 7) arranged in a row within the guide path of the gas and having a distance away from each other and that each sub-holding apparatus (5, 6, 7) has a movement absorption for the filter bodies (2, 3, 4).

2. The filter apparatus according to claim 1, **characterized in that** a feed device for unused filter bodies (2, 3, 4) and a disposal is assigned to each sub-holding device (5, 6, 7) for the filter bodies (2, 3, 4) and a disposal device for used filter bodies (2, 3, 4).

3. The filter apparatus according to claim 2, **characterized in that** the feed device and the disposal device comprise conveyor belts (8').

4. The filter apparatus according claim 2, **characterized in that** the supply device and the disposal device comprise roller sections.

5. The filter apparatus according to any one of the preceding claims, **characterized in that** each sub-holding device (5, 6, 7) has at least one sliding guide for filter bodies (2, 3, 4), in which the filter bodies (2, 3, 4) are held in a row lying adjacent to one another.

6. The filter apparatus according to any one of the preceding claims, **characterized in that** a measuring device for filter bodies (2, 3, 4) held in the sub-holding device (5, 6, 7) is assigned to each sub-holding device (5, 6, 7).

7. The filter apparatus according claim 6, **characterized in that** the measuring device is a differential pressure measuring device.

8. The filter apparatus according to any one of the preceding claims, **characterized in that** the sub-holding device, which gas is initially applied to, comprises lamellae (15) as filter bodies.

9. The filter apparatus according to claim 8, **characterized in that** the lamellae (15) are designed as U-profiles, wherein the lamellae (15) are arranged on at least two levels aligned parallel to one another.

10. The filter apparatus according to claim 9, **characterized in that** the lamellae (15) are arranged on adjacent levels offset to one another and are arranged with a U-limb facing each other.

11. The filter apparatus according to any one of the preceding claims, **characterized in that** a sub-holding device, which gas is subsequently applied to, comprises filter cartridges (16) to hold filter materials as filter bodies.

## Revendications

1. Dispositif de filtration de gaz, notamment d'air à évacuer pollué d'un brouillard de peinture, comprenant un réceptacle pour des organes filtrants, placé dans le trajet de guidage du gaz,
**caractérisé en ce**
**que** le réceptacle est divisé en au moins deux réceptacles partiels (5, 6, 7) placés l'un derrière l'autre dans le trajet de guidage du gaz et présentant un écart mutuel et **en ce que** chaque réceptacle partiel (5, 6, 7) dispose d'un absorbeur de mouvements pour les organes filtrants (2, 3, 4).

2. Dispositif de filtration selon la revendication 1, **caractérisé en ce qu'**à chaque réceptacle partiel (5, 6, 7) pour les organes filtrants (2, 3, 4) est associé un système d'alimentation pour des organes filtrants (2, 3, 4) neufs et un système d'évacuation pour des organes filtrants (2, 3, 4) usés.

3. Dispositif de filtration selon la revendication 2, **caractérisé en ce que** le système d'alimentation et le système d'évacuation comprennent des bandes convoyeuses (8').

4. Dispositif de filtration selon la revendication 2, **caractérisé en ce que** le système d'alimentation et le système d'évacuation comprennent des trajets à rouleaux.

5. Dispositif de filtration selon l'une quelconque des revendications précédentes, **caractérisé en ce que** chaque réceptacle partiel (5, 6, 7) dispose d'au moins un guidage coulissant pour des organes filtrants (2, 3, 4) dans lequel les organes filtrants (2, 3, 4) sont réceptionnés en étant adjacents les uns aux autres dans une rangée.

6. Dispositif de filtration selon l'une quelconque des revendications précédentes, **caractérisé en ce qu'**à chaque réceptacle partiel (5, 6, 7) est associé un système de mesure pour des organes filtrants (2, 3, 4) réceptionnés dans le réceptacle partiel (5, 6, 7).

7. Dispositif de filtration selon la revendication 6, **caractérisé en ce que** le système de mesure est un système de mesure de la pression différentielle.

8. Dispositif de filtration selon l'une quelconque des revendications précédentes, **caractérisé en ce que** le réceptacle partiel soumis en premier lieu au gaz comprend des lamelles (15) en tant qu'organes filtrants.

9. Dispositif de filtration selon la revendication 8, **caractérisé en ce que** les lamelles (15) sont conçues chacune sous la forme d'un profilé en U, les lamelles (15) étant placées dans au moins deux plans orientés à la parallèle l'un de l'autre.

10. Dispositif de filtration selon la revendication 9, **caractérisé en ce que** les lamelles (15) sont placées dans des plans voisins, en étant déportées les unes par rapport aux autres et avec des branches du U qui se font face.

11. Dispositif de filtration selon l'une quelconque des revendications précédentes, **caractérisé en ce qu'**un réceptacle partiel soumis ensuite au gaz comprend en tant qu'organes filtrants des cassettes filtrantes (16) destinées à réceptionner des matières filtrées.
